# EUROPÄISCHE PATENTSCHRIFT

(11) **EP 2 406 052 B1**
(45) Veröffentlichungstag und Bekanntmachung des Hinweises auf die Patenterteilung: **01.04.2015**
(21) Anmeldenummer: 10705796.0
(22) Anmeldetag: 10.02.2010
(51) Int. Cl.: B29C 44/08, B29C 44/58, B29C 45/28, B29C 45/27, B29C 33/00, B29C 45/14

(54) **VERFAHREN UND VORRICHTUNG ZUR HERSTELLUNG VON ANGUSS-FREIEN GESCHÄUMTEN BAUTEILEN**
METHOD AND DEVICE FOR PRODUCING SPRUELESS FOAMED COMPONENTS
PROCÉDÉ ET DISPOSITIF DE FABRICATION DE PIÈCES MOUSSÉES EXEMPTES DE CAROTTE

(30) Priorität: 11.03.2009 DE 102009012287
(43) Veröffentlichungstag der Anmeldung: 18.01.2012
(73) Patentinhaber: SMP Deutschland GmbH, 79268 Bötzingen (DE)
(72) Erfinder: PIGNARD, Pierre, F-68320 Jebsheim (FR); BUCHET, Yann, F-67000 Strasbourg (FR)
(74) Vertreter: Westphal, Mussgnug & Partner Patentanwälte mbB
(86) Internationale Anmeldenummer: PCT/EP2010/000825
(87) Internationale Veröffentlichungsnummer: WO 2010/102701

(56) Entgegenhaltungen:
- DE-A1- 2 127 866
- DE-A1- 3 914 937
- DE-A1-102004 052 527
- JP-A- 59 138 421
- JP-A- 63 315 218

## Beschreibung

Die vorliegende Erfindung betrifft ein Verfahren zur Herstellung von Anguss-freien geschäumten Spritzgussbauteilen, insbesondere Bauteile für Innenverkleidungen von Kraftfahrzeugen, wie z. B. Instrumententafeln, Seitenverkleidungen oder Türverkleidungen, mit den Merkmalen des Oberbegriffs des Anspruchs 1. Die Erfindung betrifft auch eine Vorrichtung zur Herstellung von Anguss-freien Spritzgussbauteilen.

Formteile oder Bauteile aus Kunststoff werden in der Fahrzeugindustrie in vielen Bereichen eingesetzt, insbesondere als Innenverkleidungsbauteile, wie z. B. Instrumententafeln, Säulenverkleidungen, Türverkleidungen oder Seitenverkleidungen. Üblicherweise sind die Innenverkleidungsbauteile mehrschichtig aufgebaut, wobei Schichten miteinander kombiniert werden, die aus unterschiedlichen Kunststoffen bestehen können und unterschiedliche spezifische Eigenschaften besitzen. So bestehen beispielsweise Instrumententafeln meist aus einer harten Trägerschicht, die aus einem glasfaserverstärkten thermoplastischen Kunststoff aufgebaut sein kann, auf der dann eine Schaumschicht aufgebracht ist, die der Instrumententafel die gewünschten haptischen Eigenschaften verleiht. Die Schaumschicht, die häufig aus Polyurethan besteht, ist dann wiederum mit einer Dekorschicht oder Dekorfolie bedeckt, die die Sichtseite des Bauteils bildet.

Bei der konventionellen Herstellung von Innenverkleidungsbauteilen wird üblicherweise eine hinterschäumte Dekorfolie mit einem Träger in einem Kaschierwerkzeug verbunden. Dieses Verfahren ist relativ aufwändig und es erfordert die Kombination von unterschiedlichen Verfahrensschritten in unterschiedlichen Werkzeugen.

Es ist jedoch auch möglich, bei geeigneter Wahl des Werkzeuges sowie der Kunststoffausgangsmaterialien eine dekorative Oberfläche direkt beim Überspritzen des Trägers mit einem thermoplastischen Kunststoff zu erhalten. So wird in der DE 102 007 021 750 A1 ein Verfahren zur Herstellung geschäumter Kunststoffkörper beschrieben, bei dem in den zu schäumenden plastifizierten Kunststoff unter Druck ein physikalisches Treibmittel eingebracht wird und der mit dem Treibmittel versetzte Kunststoff anschließend in die Kavität eines Spritzgießwerkzeuges eingespritzt wird. Bei einer anschließenden Expansion der Werkzeugkavität wird die Kunststoffschmelze dekomprimiert und es bildet sich beim Erstarren des Kunststoffes an der Werkzeugoberfläche bzw. der inneren Oberfläche der Kavität eine relativ dichte glatte Schicht aus, die als Dekoroberfläche geeignet ist, während im Inneren des dekomprimierten Kunststoffkörpers eine poröse Schaumstruktur vorliegt. Als physikalische Treibmittel werden vorzugsweise Treibmittel eingesetzt, die gasförmig in den Kunststoff eingebracht werden können, wie z. B. Stickstoff, CO₂ oder Edelgase. Eine bevorzugte Variante sieht vor, dass der geschäumte Kunststoffkörper auf einen Träger aufgebracht wird, der vor dem Einspritzen des Kunststoffs in den Werkzeughohlraum der Spritzgießmaschine eingebracht wird.

In der JP 59138421 A wird der Oberbegriff des Anspruchs 1 und in der JP 63315218 A wird der Oberbegriff des Anspruchs 10 offenbart.

In der EP 1 839 836 A1 wird ein Spritzgießverfahren zur Herstellung von mehrschichtigen Formteilen beschrieben, die aus einer festen Trägerschicht und einer geschäumten Schicht aufgebaut sind, wobei beide Schichten aus einem thermoplastischem Kunststoff bestehen. Dabei wird nach dem Spritzgießen des Trägers in einem primären Spritzgießzyklus eine Seite des Formwerkzeugs so verändert, dass sich ein schmaler Hohlraum von ca. 3 bis 4 mm zwischen dem Träger und der Formwerkzeugoberfläche ausbildet, in den das thermoplastische Material in einem sekundären Spritzgießzyklus für die geschäumte Schicht eingespritzt wird. Auch auf diese Weise erhält man eine geschäumte Oberflächenschicht mit einer dekorativen Oberflächenqualität.

Beim Spritzgießen wird das thermoplastische Material sowohl für den Träger als auch für die Schaumschicht über sogenannte Angusskanäle aus einer Plastifiziereinheit über eine Einspritzdüse in die Werkzeugkavität eingespritzt. Ein Nachteil des Spritzgießverfahrens besteht nun darin, dass nach der Fertigstellung und dem Erkalten des Formteils oder Bauteils die entsprechenden Angüsse noch mit dem fertigen Bauteil verbunden sind und entfernt werden müssen. Häufig wird dies in einem anschließenden Arbeitsgang von Hand durchgeführt, wobei die Handarbeit bekanntlich jedoch Nachteile und Risiken mit sich bringt. So können beispielsweise durch ungenaues Arbeiten die Formteile beschädigt werden und selbst bei präzisem Arbeiten zeigt die Oberfläche des Bauteils an der Stelle, an der ursprünglich der Anguss angeordnet war, eine von der übrigen Oberfläche des Bauteils unterschiedliche Oberflächenstruktur. Damit sich diese Fehler nicht nachteilig auswirken, ist man dazu übergegangen, nach Möglichkeit die Angusspunkte in Bereichen des Formteils zu positionieren, die außerhalb des späteren Sichtbereiches des Formteils liegen, was jedoch nicht immer möglich ist.

Darüber hinaus ist man auch hingegangen und hat während des Formgebungsprozesses bereits mit Hilfe von Schneidgeräten oder Schiebern im Formwerkzeug die Angüsse vom Formteil abgetrennt.

In der DE 100 59 958 A1 werden ein Verfahren und ein Spritzgusswerkzeug zur Herstellung eines Kunststoffformteils beschrieben, wobei das fertige Kunststoffteil eine sichtbare Außenfläche und eine unsichtbare Innenfläche aufweist. Um eine Nacharbeit bezüglich des Angusses zu vermeiden, wird die Anspritzfläche auf die unsichtbare Innenfläche gelegt, so dass der Anguss beim Öffnen des Werkzeugs auf seiner gesamten Länge durch ein über Schieber betätigtes Messer abgeschnitten werden kann.

In der DE 102 25 165 A1 wird ein Verfahren zur Herstellung von Spritzgußbauteilen beschrieben, bei welchem die Formmasse während einer Formfüllphase über wenigstens einen Angusskanal in den Formhohlraum eingefüllt wird, wobei die sich in den Angusskanälen bildenden Angussarme nach beendeter Formfüllphase vor dem vollständigen Erstarren des Gussbauteils abgetrennt werden. Auf diese Weise kann die aufwändige und wenig genaue Nacharbeit per Hand vermieden werden. Für die Herstellung von Anguss-freien Bauteilen sind die beiden oben genannten Verfahren jedoch nicht geeignet, da die Angussstellen auch bei diesen Verfahren zur Abtrennung der Angussarme im fertigen Formteil immer noch zu erkennen sind.

Der vorliegenden Erfindung lag somit die Aufgabe zugrunde, ein Verfahren zur Herstellung von geschäumten Bauteilen anzubieten, dass die Nachteile des Standes der Technik nicht aufweist.

Gelöst wird diese Aufgabe durch ein Verfahren mit den Merkmalen des Anspruchs 1. Vorteilhafte Weiterentwicklungen und Ausgestaltungen des erfindungsgemäßen Verfahrens sind Gegenstand der entsprechenden Unteransprüche.

Aufgabe der Erfindung ist es auch, eine Vorrichtung zur Herstellung von geschäumten Bauteilen zur Verfügung zu stellen, mit der Bauteile produziert werden können, die die Nachteile des Standes der Technik nicht aufweisen.

Gelöst wird diese Aufgabe durch eine Vorrichtung mit den Merkmalen des Anspruchs 10. Vorteilhafte Weiterentwicklungen und Ausgestaltungen der erfindungsgemäßen Vorrichtung sind Gegenstand der entsprechenden Unteransprüche.

Beim erfindungsgemäßen Verfahren zur Herstellung eines Spritzgussbauteils wird zunächst ein mit einem physikalischen oder chemischen Treibmittel versetzter Kunststoff in eine in ihrer Größe veränderbare Kavität eines Spritzgussformwerkzeugs eingespritzt. Als physikalisches Treibmittel kann dabei ein Gas, wie z. B. Kohlendioxid, Stickstoff oder ein Edelgas, eingesetzt werden, das unter Druck in den bereits plastifizierten Kunststoff eingebracht wird. Als chemische Treibmittel werden bevorzugt chemische Verbindungen eingesetzt, die dann bei einer thermischen Behandlung des mit der chemischen Verbindung vermischten Kunststoffs ebenfalls ein Gas, wie z.B. Stickstoff oder Kohlendioxid, freisetzen.

Vor dem Einspritzen des mit dem Treibmittel versetzten Kunststoffs bleibt der Zugang zur Kavität solange geschlossen, bis das Formwerkzeug sich in der Füllposition befindet. Dabei wird zum Schließen der Kavität ein Schieber eingesetzt, der einen Angusskanal aufweist, der beim Füllen der Kavität dazu dient, die Kavität mit der Plastifiziereinheit zu verbinden. Beim Ausfahren des mindestens einen Schiebers wird der im Schieber angeordnete Angusskanal mit der Kavität verbunden. Diese Verbindung wird nach dem Füllen der Kavität durch Einfahren des Schiebers wieder unterbrochen, womit der Anguss abgetrennt wird.

Der Schieber ist zusätzlich so ausgeführt, dass er nicht nur zum Schließen und Öffnen der Kavität in eine in der Abbildung horizontal angeordnete Richtung vor und zurück verfahrbar ist, sondern er kann auch in eine weitere, dazu senkrecht angeordnete vertikale Richtung bewegt werden, um mit dieser Bewegung den Expansions- oder Kompressionshub zu begleiten und dabei die Kavität abzudichten.

Die Kraftübertragung auf den Schieber erfolgt entweder direkt oder über am Schieber anliegende Einsätze, die in einer vorteilhaften Ausgestaltung über Federn vorgespannt sind. Bei einer bevorzugten Ausgestaltung der vorliegenden Erfindung erfolgt die Kraftübertragung auf den Schieber durch Federkraft.

Gleichzeitig sind am Schieber, ebenfalls unmittelbar anliegende, über Federn vorgespannte Leisten angeordnet, die durch die Federn an den Schieber gepresst werden und das Einfahren des Schiebers nach dem Füllvorgang begleiten und dabei zusammen mit dem Schieber die gefüllte Kavität abdichten.

Die Betätigung des Schiebers erfolgt in einer bevorzugten Ausgestaltung des Verfahrens in Kombination und in Abstimmung mit der Steuerung der Nadelverschlüsse der Einspritzdüsen.

Als Ausgangsmaterial für den zu schäumenden plastifizierten Kunststoff wird üblicherweise ein thermoplastischer Kunststoff, ausgewählt aus der Gruppe Polyurethan (PU), Polypropylen (PP), Polyethylen (PE) oder Polyamid (PA) eingesetzt. Auch der Träger besteht meist aus einem thermoplastischen Kunststoff, wobei bevorzugt Polypropylen (PP), Polyethylen (PE), Polybutylenterephthalat (PBT), Polyamid (PA), Polystyrol (PS), Polycarbonat (PC), Polymethylmethacrylat (PMMA), Acrylnitril-Butadien-Styrol (ABS), Acrylnitril-Butadien-Styrol / Polycarbonat Copolymerisat (ABS-PC) oder Polyoxymethylen (POM) eingesetzt wird.

Beim anschließenden Dekomprimieren der flüssigen Kunststoffschmelze durch die Expansion der Kavität des Formwerkzeugs wird ein Spritzgussbauteil ausgebildet, das einen geschäumten Kern und eine dichte, kompakte Oberfläche aufweist, die Dekoreigenschaften besitzt. Da der Anguss bereits vor der Expansion der Kavität abgetrennt wurde, kann nun ein Bauteil ausgebildet werden, das eine vollständig unversehrte Oberfläche aufweist.

Eine vorteilhafte Ausgestaltung der vorliegenden Erfindung sieht vor, dass vor dem Dekomprimieren der flüssigen Kunststoffschmelze durch die Expansion der Kavität parallel zum Einspritzen des mit Treibmittel versetzten plastifizierten Kunststoffes ein Kompressionshub durchgeführt wird. Dieser Kompressionshub wird vorteilhaft zeitversetzt zum Einspritzen, beispielsweise nach dem Erreichen einer kritischen Fließweglänge des flüssigen Kunststoffes, gestartet. Auf diese Weise kann die Fließfrontgeschwindigkeit erhöht und das Füllen der Kavität erleichtert werden. Der Kompressionshub während des Einspritzens der Kunststoffschmelze ermöglicht insbesondere die Realisierung von relativ dünnen homogenen geschäumten Schichten oder Bauteilen.

Bei einer weiteren vorteilhaften Ausführungsform des erfindungsgemäßen Verfahrens, die insbesondere für Innenverkleidungsteile von Kraftfahrzeugen geeignet ist, ist die in ihrer Größe veränderbare Kavität mit einem Träger belegt, auf den eine Schaumschicht aufgebracht wird, wobei beim Dekomprimieren der flüssigen Kunststoffschmelze auf dem Träger eine Schaumschicht ausgebildet wird, die einen geschäumten Kern und eine kompakte Oberfläche aufweist, die als Dekorschicht geeignet ist.

Eine bevorzugte Ausgestaltung des Verfahrens sieht vor, dass das erfindungsgemäße Verfahren in Kombination mit einem Zweikomponentenspritzgießverfahren eingesetzt wird, wobei vor dem Einspritzen des mit dem Treibmittel versetzten Kunststoffs in einem vorgelagerten Schritt über einen primären Spritzgießzyklus in einer mit einem ersten Formgegenstück ausgebildeten ersten Kavität zunächst der Träger ausgebildet wird. Dann wird der fertige Träger in dem anschließenden sekundären Spritzgießzyklus im gleichen Formwerkzeug, aber mit einem zweiten Formgegenstück, mit dem zu schäumenden plastifizierten Kunststoff beschichtet wird. Dabei entspricht dieser zweite Spritzgießzyklus dem in Anspruch 1 beschriebenen Verfahren, wobei die zweite Kavität der in ihrer Größe veränderbaren Kavität des Spritzgussformwerkzeugs aus Anspruch 1 entspricht, die mit einem Träger belegt ist und in die nun der zu schäumende plastifizierte Kunststoff eingespritzt wird.

Diese Variante wird beispielsweise in einem Formwerkzeug durchgeführt, das mit mehreren zum Formwerkzeugkern passenden Formgegenstücken kombiniert werden kann, mit deren Hilfe dann unterschiedliche Kavitäten realisiert werden können.

Gegenstand der vorliegenden Erfindung ist auch eine Vorrichtung zur Herstellung eines mehrschichtigen Spritzgussbauteils, wobei die Vorrichtung ein Formwerkzeug mit einer aus einem Formwerkzeugkern und einer Formwerkzeugmatrize (Formwerkzeuggegenstück) gebildeten, in ihrer Größe veränderbaren Kavität umfasst. Im Formwerkzeug ist ein Schieber angeordnet, der über einen Angusskanal permanent mit einer Einspritzdüse für plastifiziertes Kunststoffmaterial in Wirkverbindung steht. Durch Ausfahren des Schiebers wird der Angusskanal mit einer in ihrer Größe veränderbaren Kavität verbunden, so dass plastifizierter Kunststoff in die Kavität eingefüllt werden kann. Die Verbindung wird durch Einfahren des Schiebers nach dem Füllen der Kavität unterbrochen. Gleichzeitig ist der Schieber so ausgeführt, dass er in mindestens eine weitere Raumrichtung verschiebbar ist, so dass er nicht nur das Öffnen und Schließen der Kavität bewirkt, sondern auch den einen möglichen Kompressionshub oder Expansionshub begleiten kann und dabei die Kavität abdichtet. Die Kraftübertragung auf den Schieber erfolgt entweder direkt durch einen entsprechenden Antrieb oder indirekt über am Schieber anliegende Einsätze, die mit Federn vorgespannt sind. Gleichzeitig sind am Schieber zusätzliche mit Federn vorgespannte Leisten angeordnet, die aufgrund der Vorspannung den Schieber beim Zurückfahren (Einfahren) begleiten und dabei die Kavität abdichten.

Im Folgenden wird die vorliegende Erfindung anhand von Zeichnungen ausführlich erläutert. Dabei zeigen:

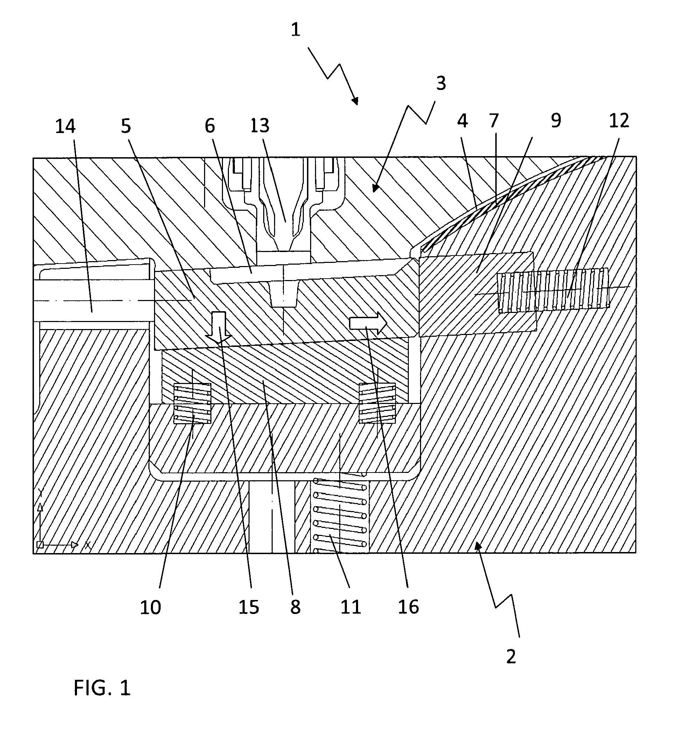

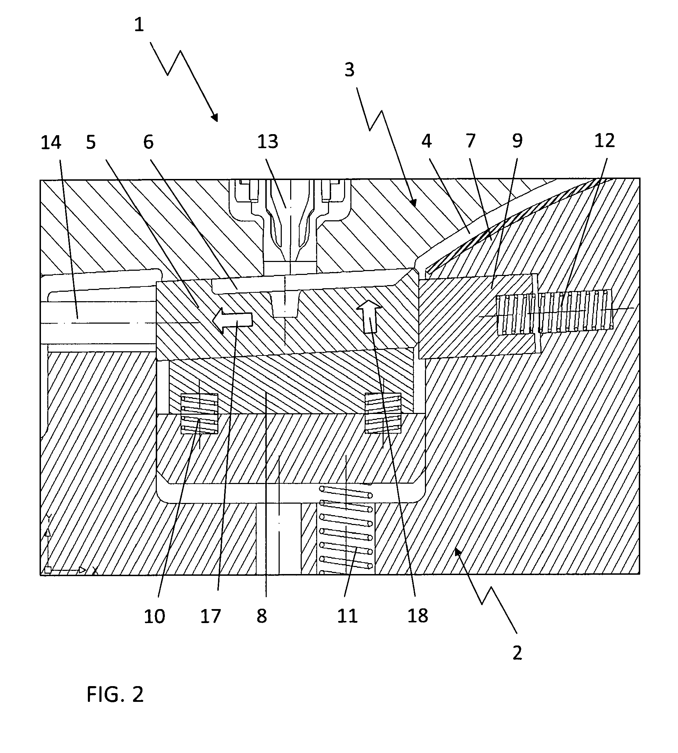

- Fig. 1 + 2: Momentaufnahmen eines Ausschnittes eines Formwerkzeugs zu unterschiedlichen Verfahrenszeitpunkten im Querschnitt.

Die Figur 1 zeigt im Querschnitt einen Ausschnitt eines Formwerkzeugs 1 mit einem Formwerkzeugkern 2 und einer Formwerkzeugmatrize 3, die miteinander eine mit plastifiziertem Kunststoff zu füllende, in ihrer Größe veränderbare Kavität 4 ausbilden.

Im Formwerkzeugkern 2 ist ein Schieber 5 angeordnet, der in unterschiedliche Richtungen verschiebbar ist, die in der vorliegenden Abbildung als Richtungspfeile 15 und 16 angegeben sind. In dem Schieber 5 ist ein Angusskanal 6 angeordnet, der in permanenter Wirkverbindung mit der Einspritzdüse 13 einer Plastifiziereinheit steht.

Die in der Figur 1 gezeigte Momentaufnahme zeigt den Schieber 5 in der Position zum Befüllen der Kavität 4, wobei der Angusskanal 6 die Einspritzdüse 13 mit der Kavität 4 verbindet und damit ein Befüllen der Kavität 4 ermöglicht. Diese Position erreicht der Schieber 5 mit Hilfe des direkt auf den Schieber wirkenden Antriebs 14.

In der Ausgangssituation vor dem Befüllen der Kavität 4, die in der vorliegenden Abbildung nicht wiedergegeben wird, jedoch anhand der Fig. 1 ebenfalls leicht erklärbar ist, ist der Schieber in entgegengesetzter Richtung zum Richtungspfeil 16 horizontal verschoben, wobei dann die unmittelbar am Schieber 5 anliegende, über die Feder 12 vorgespannte Leiste 9 die ungefüllte Kavität 4 verschließt.

In der in der Figur 1 wiedergegebenen Situation ist in der Kavität 4 ein Träger 7 angeordnet, der beim Einspritzen der plastifizierten Kunststoffmasse mit dem Kunststoff, der sich mit dem Trägermaterial verbindet, beschichtet wird.

Die Bewegungen des Schiebers 5 werden durch direkten Antrieb 14 oder durch Federkraft bewirkt, wobei die Kraftübertragung für die Vertikalbewegung, die durch die Richtungspfeile 15 und 18 (Figur 2) wiedergegeben ist, durch die Feder 11 bewirkt wird, die über mindestens einen mit Federn 10 vorgespannten Einsatz 8 auf den Schieber 5 einwirkt. Die Federn 10 für die Vorspannung der Einsatzes 8 dienen dabei nicht der Kraftübertragung sondern haben in erster Linie die Funktion, verschleißregulierend die Abdichtung des Schiebers 5 gegenüber der Formwerkzeugmatrize (Formgegenstück) 3 sicherzustellen.

Nach dem Füllvorgang wird der Schieber 5 durch Zurückfahren des Antriebs 14 entgegen der Richtung des Richtungspfeils 15 in die Ausgangsposition zurückgeschoben, wobei die Feder 12 ein Mitfahren der auf diese Weise vorgespannten Leiste 9 und damit ein Schließen der Kavität 4 und gleichzeitig das Abschneiden oder Abtrennen des Angusses garantiert.

Die Figur 2 zeigt den Ausschnitt aus Figur 1 zum Zeitpunkt der anschließenden Expansion der Kavität 4. Der Schieber 5 befindet sich in seiner horizontalen Ausgangsposition, wobei er im Vergleich zur Darstellung in Figur 1 in Richtung des Richtungspfeils 17 verschoben ist. Diese Horizontalverschiebung wurde von der unmittelbar am Schieber 5 anliegenden Leiste 9 begleitet, deren unmittelbarer Kontakt zum Schieber 5 durch die Feder 12 gewährleistet wird, die die Leiste 9 an den Schieber 5 andrückt. Die Expansion der Kavität 4 hat in Richtung des Richtungspfeiles 18 stattgefunden, wobei diese in der Zeichnung als Vertikalverschiebung dargestellte Bewegung vom Schieber 5 begleitet worden ist. Die Vertikalbewegung des Schiebers 5 in Richtung des Richtungspfeils 18 wird durch Federkraft bewirkt, wobei die Kraftübertragung über die Feder 11 erfolgt, die auf einen unmittelbar am Schieber 5 anliegenden gefederten Einsatz 8 einwirkt.

Die dekorative Außenschicht des Formteils bildet sich beim Erkalten des Kunststoffes an der Werkzeugoberfläche aus, wobei der plastifizierte Kunststoff an der Oberfläche des Formgegenstücks 3 bzw. der inneren Oberfläche der Kavität 4 zu einer dichten, kompakten Dekorschicht erstarrt, während der Kern der Schicht, die auf den Träger 7 aufgebracht ist, als poröser Schaum vorliegt. Dadurch, dass der Schieber 5 den Anguss abtrennt, bevor der Kunststoff erstarrt ist, und dann den Expansionshub begleitet, kann dem Formwerkzeug 1 nach dem Abkühlen ein Form- oder Bauteil entnommen werden, das über seine gesamte Oberfläche eine unversehrte Dekorschicht aufweist.

### Bezugszeichenliste

- 1: Formwerkzeug
- 2: Formwerkzeugkern
- 3: Formwerkzeugmatrize (Formgegenstück)
- 4: Kavität
- 5: Schieber
- 6: Angusskanal
- 7: Träger
- 8: Einsatz
- 9: Leiste
- 10: Feder
- 11: Antriebsfeder
- 12: Vorspannfeder
- 13: Einspritzdüse
- 14: Antrieb
- 15: Richtungspfeil
- 16: Richtungspfeil
- 17: Richtungspfeil
- 18: Richtungspfeil

## Patentansprüche

1. Verfahren zur Herstellung eines geschäumten Spritzgussbauteils mit den Verfahrensschritten:
a) Einbringen eines physikalischen oder chemischen Treibmittels in einen zu schäumenden Kunststoff,
b) Einspritzen des mit dem Treibmittel versetzten, plastifizierten Kunststoffs in eine in ihrer Größe veränderbare Kavität (4) eines Spritzgussformwerkzeugs (1) und
c) Dekomprimieren der flüssigen Kunststoffschmelze durch eine Expansion der Kavität (4) des Formwerkzeugs (1),
**dadurch gekennzeichnet, dass**
- vor dem Einspritzen des Kunststoffs der Zugang zur Kavität (4) durch mindestens einen einen Angusskanal (6) aufweisenden Schieber (5) solange geschlossen wird, bis das Formwerkzeug (1) sich in der Füllposition befindet,
- anschließend durch Ausfahren des mindestens einen Schiebers (5) der im Schieber (5) angeordnete Angusskanal (6) mit der Kavität (4) verbunden wird,
- nach dem Füllen der Kavität (4) mit der Kunststoffschmelze, zwischen den Schritten b) und c), die Verbindung zwischen Angusskanal (6) und Kavität (4) durch Einfahren des Schiebers (5) wieder unterbrochen wird und damit der Anguss abgetrennt wird, und
- der Schieber (5) den anschließenden Expansionshub begleitet und dabei die expandierende Kavität (4) abdichtet.

2. Verfahren nach Anspruch 1,
**dadurch gekennzeichnet, dass** die Kavität (4) in einem vorgeschalteten Verfahrensschritt mit einem Träger (7) belegt wird.

3. Verfahren nach Anspruch 1 oder 2,
**dadurch gekennzeichnet, dass** parallel zum Füllen der Kavität (4) im Schritt b) zeitversetzt zum Beginn des Einspritzens des plastifizierten Kunststoffs ein Kompressionshub durchgeführt wird.

4. Verfahren nach einem der Ansprüche 1 bis 3,
**dadurch gekennzeichnet, dass** die Kraftübertragung auf den Schieber (5) direkt über einen Antrieb (14) und/oder indirekt über mindestens einen mit Federn (10) vorgespannten, unmittelbar am Schieber (5) anliegenden Einsatz (8) erfolgt.

5. Verfahren nach einem der Ansprüche 1 bis 4,
**dadurch gekennzeichnet, dass** unmittelbar am Schieber (5) eine über eine Feder (12) vorgespannte Leiste (9) anliegt, die das Einfahren des Schiebers (5) begleitet und dabei zusammen mit dem Schieber (5) die gefüllte Kavität (4) abdichtet.

6. Verfahren nach einem der Ansprüche 1 bis 5,
**dadurch gekennzeichnet, dass** die Betätigung des mindestens einen Schiebers (5) in Kombination mit der Steuerung der Nadelverschlüsse der Einspritzdüse (13) erfolgt.

7. Verfahren nach einem der Ansprüche 1 bis 6,
**dadurch gekennzeichnet, dass** als Ausgangsmaterial für den zu schäumenden plastifizierten Kunststoff ein thermoplastischer Kunststoff ausgewählt aus der Gruppe Polyurethan (PU), Polypropylen (PP) oder Polyethylen (PE) Polyamid eingesetzt wird.

8. Verfahren nach einem der Ansprüche 2 bis 7,
**dadurch gekennzeichnet, dass** ein Träger (7) aus einem thermoplastischen Kunststoff ausgewählt aus der Gruppe Polypropylen (PP), Polyethylen (PE), Polybutylenterephthalat (PBT), Polyamid (PA), Polystyrol (PS), Polycarbonat (PC), Polymethylmethacrylat (PMMA), Acrylnitril-Butadien-Styrol (ABS), Acrylnitril-Butadien-Styrol / Polycarbonat Copolymerisat (ABS-PC) oder Polyoxymethylen (POM) eingesetzt wird.

9. Verfahren nach einem der Ansprüche 1 bis 8,
**dadurch gekennzeichnet, dass** das Verfahren eine Zweikomponenten-Spritzgießverfahren ist, wobei vor dem Einspritzen des mit dem Treibmittel versetzten Kunststoffs in einem als primärer Spritzgusszyklus vorgelagerten Schritt in einer mit einem ersten Formgegenstück ausgebildeten ersten Kavität der Träger (7) ausgebildet wird und der fertige Träger (7) anschließend in einem sekundären Spritzgießzyklus in der mit einem zweiten Formgegenstück (3) ausgebildeten zweiten Kavität (4) mit dem zu schäumenden plastifizierten Kunststoff beschichtet wird.

10. Vorrichtung zur Herstellung eines mehrschichtigen Spritzgussbauteils, wobei die Vorrichtung ein Formwerkzeug (1) mit einer aus einem Formwerkzeugkern (2) und einer Formwerkzeugmatrize (3) gebildeten, in ihrer Größe veränderbaren Kavität (4) umfasst, wobei im Formwerkzeug (1) ein mit einer Einspritzdüse (13) in Wirkverbindung stehender Angusskanal (6) angeordnet ist und die expandierbare Kavität (4) durch Ausfahren eines Schiebers (5) mit dem Angusskanal (6) verbindbar und durch Einfahren des Schiebers (5) vom Angusskanal (6) wieder abtrennbar ist,
wobei
der Schieber (5) in unterschiedliche, teilweise zueinander senkrecht stehende Richtungen (15, 16, 17 und 18) verschiebbar ist, **dadurch gekennzeichnet, dass** der Schieber (5) den Angusskanal (6) aufweist.

11. Vorrichtung nach Anspruch 10,
**dadurch gekennzeichnet, dass** mindestens ein Antrieb (14) zur direkten Kraftübertragung am Schieber (5) angeordnet ist.

12. Vorrichtung nach Anspruch 10 oder 11,
**dadurch gekennzeichnet, dass** am Schieber (5) mindestens ein unmittelbar anliegender, über Federn (10) vorgespannter Einsatz (8) zur indirekten Kraftübertragung auf den Schieber (5) angeordnet ist.

13. Vorrichtung nach einem der Ansprüche 10 bis 12,
**dadurch gekennzeichnet, dass** am Schieber (5) mindestens eine unmittelbar anliegende, mit einer Feder (12) vorgespannte Leiste (9) zum Abdichten der Kavität (4) beim Einfahren des Schiebers (5) angeordnet ist.

## Claims

1. A method of producing a foamed injection-moulded component with the method steps:
a) introducing a physical or chemical blowing agent into a plastics material to be foamed,
b) injecting the plasticized plastics material mixed with the blowing agent into a cavity (4) of variable size of an injection-moulding tool (1), and
c) decompressing the liquid plastics material melt by the expansion of the cavity (4) of the injection-moulding tool (1),
**characterized in that**
- before the injection of the plastics material the access to the cavity (4) is closed by at least one slide (5) having a sprue channel (6), until the moulding tool (1) is in the filling position,
- then, as a result of the at least one slide (5) being moved out, the sprue channel (6) present in the slide (5) is connected to the cavity (4),
- after the filling of the cavity (4) with the plastics material melt, between steps b) and c), the connection between the sprue channel (6) and the cavity (4) is interrupted again by the introduction of the slide (6) and the sprue is separated in this way, and
the slide (5) follows the subsequent expansion stroke and seals off the expanding cavity (4) in this case.

2. A method according to claim 1, **characterized in that** the cavity (4) is occupied by a carrier (7) in a prior method step.

3. A method according to claim 1 or 2, **characterized in that** a compression stroke is carried out parallel to the filling of the cavity (4) in step b) staggered in time from the beginning of the injection of the plasticized plastics material.

4. A method according to any one of claims 1 to 3, **characterized in that** the transmission of force to the slide (5) takes place directly by way of a drive (14) and/or indirectly by way of at least one insert (8) pre-stressed with springs (10) and resting directly on the slide (5).

5. A method according to any one of claims 1 to 4, **characterized in that** a strip (9), which is pre-stressed by way of a spring (12) and which follows the introduction of the slide (5) and together with the slide (5) seals off the filled cavity (4) in this case, rests directly on the slide (5).

6. A method according to any one of claims 1 to 5, **characterized in that** the actuation of the at least one slide (5) takes place in combination with the control of the needle closures of the injection nozzle (13).

7. A method according to any one of claims 1 to 6, **characterized in that** a thermoplastic plastics material selected from the group of polyurethane (PU), polypropylene (PP) or polyethylene (PE) polyamide is used as the starting material for the plasticized plastics material to be foamed.

8. A method according to any one of claims 2 to 7, **characterized in that** a carrier (7) of a thermoplastic plastics material selected from the group of polypropylene (PP), polyethylene (PE), polybutylene terephthalate (PBT), polyamide (PA), polystyrene (PS), polycarbonate (PC), polymethyl methacrylate (PMMA), acrylonitrile butadiene styrene (ABS), acrylonitrile butadiene styrene / polycarbonate copolymerizate (ABS-PC) or polyoxymethylene (POM) is used.

9. A method according to any one of claims 1 to 8, **characterized in that** the method is a two-component injection-moulding method, wherein before the injection of the plastics material mixed with the blowing agent, in a step preceding as a primary injection moulding cycle, the carrier (7) is formed in a first cavity formed with a first matching part of the mould, and in a secondary injection moulding cycle in the second cavity (4) formed with a second matching part (3) of the mould the finished carrier (7) is then coated with the plasticized plastics material to be foamed.

10. An apparatus for the production of a multiple-layer injection-moulded component, wherein the apparatus comprises a moulding tool (1) with a cavity (4) of variable size formed from a moulding tool core (2) and a moulding tool die (3), wherein a sprue channel (6) operatively connected to an injection nozzle (13) is arranged in the moulding tool (1) and the cavity (4) capable of being expanded is capable of being connected to the sprue channel (6) by a slide (5) being moved out and is capable of being separated from the sprue channel (6) again by the slide (5) being moved in, wherein the slide (5) is displaceable in different directions (15, 16, 17 and 18) at right angles to one another in part, **characterized in that** the slide (5) has the sprue channel (6).

11. An apparatus according to claim 10, **characterized in that** at least one drive (14) for the direct transmission of force is arranged on the slide (5).

12. An apparatus according to claim 10 or 11, **characterized in that** at least one directly adjacent insert (8) pre-stressed by way of springs (10) for the indirect transmission of force to the slide (5) is arranged on the slide (5).

13. An apparatus according to any one of claims 10 to 12, **characterized in that** at least one directly adjacent strip (9) pre-stressed with a spring (12) for sealing off the cavity (4) as the slide (5) is introduced is arranged on the slide (5).

## Revendications

1. Procédé d'obtention d'une pièce moulée par injection expansée comprenant les étapes consistant à :
a) introduire un agent porogène physique ou chimique dans un matériau synthétique à expanser,
b) injecter le matériau synthétique plastifié mélangé à l'agent porogène dans une cavité (4) de dimensions variables d'un outil de moulage par injection (1), et
c) décomprimer la masse fondue de matériau synthétique fluide par expansion de la cavité (4) de l'outil de moulage (1),
**caractérisé en ce qu'**
- avant l'injection du matériau synthétique, l'accès à la cavité (4) est fermé par un coulisseau (5) comportant au moins un canal de carotte (6) jusqu'à ce que l'outil de moulage (1) se trouve dans la position de remplissage,
- puis, suite au déploiement du coulisseau (5), le canal de carotte (6) situé dans ce coulisseau est relié à la cavité (4),
- après le remplissage de la cavité (4) par la masse de matériau synthétique fondue, entre les étapes b) et c), la liaison entre le canal de carotte (6) et la cavité (4) est à nouveau interrompue par repliement du coulisseau (5) et la carotte est ainsi séparée, et
- le coulisseau (5) accompagne la course d'expansion ultérieure et assure ainsi l'étanchéité de la cavité (4) à expanser.

2. Procédé conforme à la revendication 1,
**caractérisée en ce que**
dans une étape située en amont, la cavité (4) est garnie d'un support (7).

3. Procédé conforme à la revendication 1 ou 2,
**caractérisée en ce que**
parallèlement au remplissage de la cavité (4), dans l'étape b) une course de compression est mise en oeuvre en étant décalée dans le temps par rapport au début de l'injection du matériau synthétique plastifié.

4. Procédé conforme à l'une des revendications 1 à 3,
**caractérisée en ce que**
la transmission des efforts sur le coulisseau (5) est effectuée directement par l'intermédiaire d'un organe d'entrainement (14) et/ou indirectement par l'intermédiaire d'au moins un insert (8) s'appliquant directement sur le coulisseau (5) et précontraint par des ressorts (10).

5. Procédé conforme à l'une des revendications 1 à 4,
**caractérisée en ce qu'**
directement sur le coulisseau (5) s'applique une baguette (9) précontrainte par un ressort (12) qui accompagne le repliement du coulisseau (5) et assure ainsi conjointement avec le coulisseau (5) l'étanchéité de la cavité (4) remplie.

6. Procédé conforme à l'une des revendications 1 à 5,
**caractérisée en ce que**
l'actionnement du coulisseau (5) est effectué en combinaison avec la commande de l'obturation de l'aiguille de la buse d'injection (13).

7. Procédé conforme à l'une des revendications 1 à 6,
**caractérisée en ce qu'**
entant que matériau de départ pour le matériau synthétique plastifié à expanser on utilise un matériau synthétique thermoplastique choisi dans le groupe formé par le polyuréthane (PU), le polypropylène (PP) ou le polyéthylène (PE) polyamide.

8. Procédé conforme à l'une des revendications 2 à 7,
**caractérisée en ce que**
l'on utilise un support (7) en un matériau synthétique thermoplastique choisi dans le groupe formé par le polypropylène (PP), le polyéthylène (PE), le polybutylène téréphtalate (PBT), le polyamide (PA), le polystyrène (PS), le polycarbonate (PC), le polyméthyl méthacrylate (PMMA), l'acrylonitrile-butadiène-styrène (ABS), le copolymère acrylonitrile-butadiène-styrène/polycarbonate (ABS-PC) ou le polyoxyméthylène (POM).

9. Procédé conforme à l'une des revendications 1 à 8,
**caractérisée en ce que**
le procédé est un procédé de moulage par injection bi-composants selon lequel avant l'injection du matériau synthétique mélangé à l'agent porogène,
le support (7) est formé, dans une étape située en amont constituant un cycle de moulage par injection primaire dans une première cavité formée avec une première pièce de moule antagoniste, puis dans un cycle de moulage par injection secondaire, le support (7) fini, est revêtu avec le matériau synthétique plastifié à expanser dans la seconde cavité (4) réalisée avec une seconde pièce de moule antagoniste (3).

10. Dispositif d'obtention d'une pièce moulée par injection multicouche comprenant un outil de moulage (1) avec une cavité (4) de dimensions variables formé d'un noyau d'outil de moulage (2) et d'une matrice d'outil de moulage (3), dans l'outil de moulage (1) étant prévu un canal de carotte (6) en liaison fonctionnelle avec une buse d'injection (13), et la cavité (4) pouvant être expansée, pouvant être reliée avec le canal de carotte (6) par déploiement d'un coulisseau (5), et pouvant à nouveau être séparée du canal de carotte (6) par repliement du coulisseau (5), ce coulisseau (5) pouvant être déplacé par coulissement dans des directions (15, 16, 17 et 18) situées partiellement perpendiculairement les unes aux autres,
**caractérisée en ce que**
le coulisseau (5) comprend le canal de carotte (6).

11. Dispositif conforme à la revendication 10,
**caractérisée en ce qu'**
au moins un organe d'entrainement (14) est prévu pour permettre une transmission directe des efforts sur le coulisseau (5).

12. Dispositif conforme à la revendication 10 ou 11,
**caractérisée en ce que**
le coulisseau (5) comporte au moins un insert (8) s'appliquant directement, sur celui-ci et précontraint par des ressorts (10) pour permettre une transmission indirecte des efforts sur le coulisseau (5).

13. Dispositif conforme à l'une des revendications 10 à 12,
**caractérisée en ce que**
le coulisseau (5) comporte au moins une baguette (9) s'appliquant directement sur celui-ci précontrainte par un ressort (12) et permettant d'assurer l'étanchéité de la cavité (4) lors du repliement du coulisseau (5)
